# EUROPEAN PATENT APPLICATION

(11) **EP 1 720 345 A2**
(43) Date of publication of application: **08.11.2006**
(21) Application number: 06252425.1
(22) Date of filing: 08.05.2006
(51) Int. Cl.: H04N 5/44, H04N 5/445

(54) **Method and apparatus for providing an interactive facility in a computer in relation to digital video or audio signals**

(30) Priority: 06.05.2005 GB 0509312
(71) Applicant: BRITISH BROADCASTING CORPORATION, London W1A 1AA (GB)
(72) Inventor: Lipscombe, Andrew Nicholas, British Broad. Corp, Tadworth Surrey KT20 6NP (GB)
(74) Representative: Abnett, Richard Charles

(57) **Abstract**

An interactive facility is provided on a computer (54) in relation to an MPEG2 transport stream over an internet protocol network (52). The computer is connected through the network to a first internet protocol address identifying a first network socket (80) on a network server (70), from which it receives a first digital single program stream. This is decoded and displayed to the user. If a request for an interactive facility is made by the user, the user is presented on-screen with a menu of possible services. If the user selects one of the possible services and the identification of the selected service is determined, and if the selected service is in another digital program stream, a second internet protocol address is determined, by looking up the service ID in a table stored in the computer and which associates each service ID with an IP address. The computer is then connected through the network to this second internet protocol address identifying the second network socket and receives a second digital program stream, which is decoded and displayed to the user. The second internet protocol address associated with the selected service can be determined by looking up in a table stored in the computer which associates service identifications and internet protocol addresses. The table is updated manually from data included by an added stage (92), at a server (70) in the digital program stream.

## Description

### BACKGROUND OF THE INVENTION

This invention relates to a method and apparatus for providing an interactive facility of the type described below in a computer in relation to a digital video or audio signal which is streamed over an IP (Internet Protocol) network, that is a network using IP addressing, and to a computer program for use in the method. The invention is particularly, though not exclusively, suitable for use in providing an interactive facility in relation to full-definition digital television signals streamed over an IP network to a personal computer. The network may be the internet, or may be a local area network (LAN) in a single building, for example.

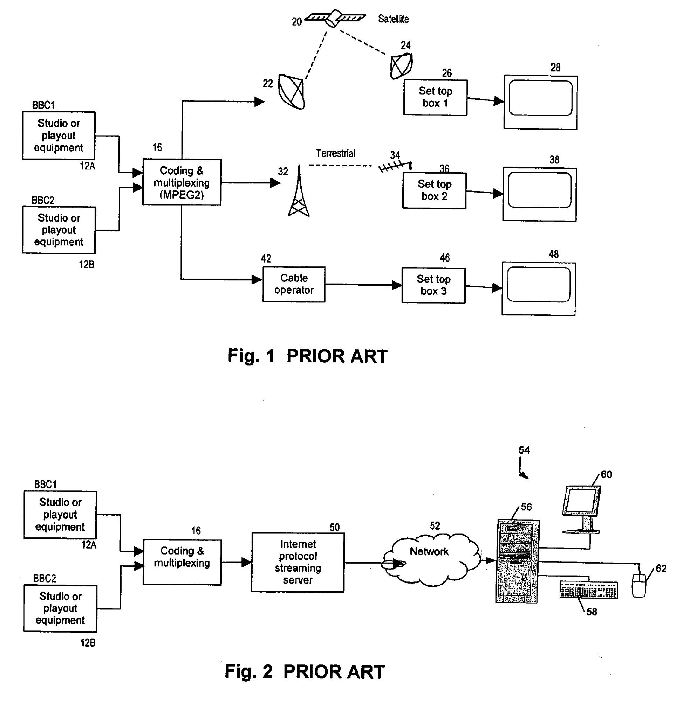

Digital broadcasting of television programmes, or digital video broadcasting (DVB), can take place in three ways, by satellite, terrestrially, or by cable, all illustrated in Figure 1. This figure diagrammatically illustrates a broadcast transmission system 10 with two television programme services, shown as BBC1 and BBC2. Video signals are generated in studios or re-played from tape or disk-based storage illustrated by broadcast equipment 12A, 12B, the outputs of which are processed into a digital format suitable for sending to coding and multiplexing equipment 16. This equipment includes an MPEG2 (Moving Picture Expert Group 2) coder to generate an MPEG2 Packetised Elementary Stream (PES). These MPEG2 PES streams are then multiplexed as appropriate into an MPEG2 transport stream (TS).

The MPEG2 transport stream from the coding and multiplexing system 16 is then sent for transmission. The first transmission shown is via a satellite 20, and for this purpose an output of the coding and multiplexing system is sent to a ground station 22 which transmits the signal up to the satellite at an appropriate radio frequency. The satellite 20 includes one or more transponders which receive the signals from the ground station 22 and retransmit them back down to the earth's surface. At the earth's surface these signals are received by a conventional reception dish antenna 24 and passed to a so-called set-top box 26. The set-top box 26 converts the signals back to baseband and supplies them to a receiver 28 with a display so that they can be seen by the viewer. The set-top box 26 includes an RF front end, an MPEG2 demultiplexer to demultiplex the transport stream which was multiplexed together in the coding and multiplexing system 16, and an MPEG2 decoder to reverse the action of the MPEG2 coder at the studio. The viewer can select a desired service by instructing the set-top box 26, typically by using a remote control unit. This may involve a change in the satellite transponder from which the signal is received, which may be regarded as a change in frequency band or simply a change in the service selected from the multiplex to which the set-top box is already tuned. The transmission standard used for satellite broadcast transmission is known as DVB-S (Digital Video Broadcasting - Satellite).

The second transmission method is illustrated by a diagrammatically-shown terrestrial UHF (Ultra High Frequency) transmitter 32. This transmitter may transmit in the same frequency bands as are used for traditional analogue UHF transmissions, though the channels are chosen to minimise interference with analogue transmissions. The transmissions from transmitter 32 are received by antennas 34 and applied to set-top boxes 36 which each have a UHF radiofrequency front end and convert the signals to baseband. The set-top box 36 includes an MPEG2 demultiplexer and an MPEG2 decoder as are in the set-top box 26. The signals are supplied to a receiver 38, which can be identical to the receiver 28, so as to be seen by the viewer. The viewer can select the desired digital service by instructing the set-top box 36, typically by using a remote control unit. This may involve a change in the UHF frequency at which the signal is received, or simply a change in the service selected from the multiplex to which the set-top box is already tuned. The transmission standard used for terrestrial broadcast transmission is known as DVB-T (Digital Video Broadcasting - Terrestrial). The design of a DVB-T transmitter and a DVB-T receiver is described in our European Patent Application EP 1221793A to which reference may be made for further details.

Finally the third transmission method illustrated in Figure 1 is cable transmission, and for this purpose the signal from the coding and multiplexing system is passed to a cable operator 42. Here it is modulated onto an appropriate transmission frequency and transmitted by cable, typically optical fibre or coaxial cable, to set-top boxes 46. Again each box has an appropriate high-frequency front end which converts the received signals to baseband and applies them to a receiver 48, which can be identical to the receivers 28 and 38. The set-top box 46 includes an MPEG2 demultiplexer and an MPEG2 decoder as are in the set-top box 26. The viewer can select the desired cable service by instructing the set-top box 46, typically by using a remote control unit. This may involve a change of frequency at which the signal is received, or simply a change in the service selected from the multiplex to which the set-top box is already tuned

As indicated above, the MPEG2 signal that is transmitted by the three methods described is known as a transport stream. The transport stream is a multiplex of several services. It contains the encoded audio and video data, other components such as subtitles and schedule information, and tables that allow the set-top box to identify the contents of the transport stream. These mandatory tables are known as PSI/Sl (the general term for combined MPEG Program Specific Information and DVB Service Information). A service delivery table "SDT Actual" lists the services in the multiplex, and a service delivery table "SDT Other" lists the services in other multiplexes on the same delivery platform to which the set-top box is capable of tuning. A program association table (PAT) lists the services available in the multiplex and contains references to a series of program map tables (PMT) listing the components for each service. Each component is identified by its packet identification code (PID) which is contained in a 4-byte header in the program elementary stream (PES) containing the component data itself. A component can be defined as belonging to several services in the same multiplex; this practice is known as sharing components and is often used for interactive data components. Also included is a network information table (NIT) which contains frequency tuning details of other transport streams that may be available to the same decoder, for example by tuning to a different radio frequency (RF) channel, or even steering an antenna dish to a different satellite.

For further information concerning the MPEG system and its transmission, reference may be made to the many books on the subject. A concise guide entitled "A Guide to MPEG Fundamentals and Protocol Analysis" has been published by Tektronix Inc.

The combination of MPEG compression with the high frequencies used in transmission and large bandwidths thus available means that a single set-top box can receive many services, and typically can receive up to some hundreds of full-definition digital programmes. It is therefore possible for a viewer to select a desired program by use of the set-top box's remote control unit. The set-top box makes use of the various tables described above to make the actual selection.

One feature available with such digital set-top boxes is a so-called interactive feature. If a user presses a particular button on the remote control unit, he or she is given access to further or different information. Typically this feature might be used during a news programme. The newsreader will say when concluding an item, "if you would like to know more please press the red button". Pressing the red button activates a software routine in the set-top box which causes additional content to be displayed on the screen. It may occupy only part of the screen, and/or may be partially transparent so the program is still viewable underneath. The additional content may typically include graphical data, text content, and instructions for where to position the content on the screen. This data is carried within one or more components in the transport stream using a Digital Storage Media Command and Control (DSMCC) object carousel. There may also be an instruction to decode a video stream, perhaps reduce its size and embed it within the display. The interactive application can create a cursor on the screen by which the user can select further interactive content.

In the simplest case all the interactive data called for will be within the transport stream to which the set-top box is already tuned, even if it is not part of the service being viewed. However, mechanisms exist for using data spread across more than one transport stream. One of the options on-screen may be additional video and audio content about a particular news item, carried in a different transport stream. If the user selects this, then the set-top box needs to re-tune. It can do this using the information first in the NIT and then in the tables in the newly-acquired multiplex. This happens automatically without further intervention from the user who will probably not even realize that the set-top box has retuned.

There is now an increasing desire to transmit or stream video content over IP networks, whether a local-area network (LAN), for example in an apartment block or larger residential development, or the internet. Figure 2 illustrates such an internet TV system. The studio arrangements and the coding and multiplexing 16 are the same as in Figure 1, but the output of the coding and multiplexing 16 is now applied to an internet protocol server 50 in addition to the normal transmission paths (satellite, terrestrial and cable) which are not shown in Figure 2 but are the same as in Figure 1. Applying the output of the studio arrangements to the server will involve demultiplexing the MPEG transport stream into separate services. Because network capacity on the LAN or the internet may be limited, it may be necessary to decode the MPEG2 video and audio, and then recode at a lower bit-rate, even though this will incur a loss of quality.

The internet protocol (IP) server 50 is connected to the network 52, which, as noted above, may be the internet or may be a smaller network such as in a building. To the network is connected a personal computer (PC) 54, having a main processor unit 56, keyboard 58, display 60, and mouse 62 in conventional fashion. The PC main unit includes a network card such as an Ethernet card to enable it to connect with the network 52. The PC also contains a facility to decode an MPEG2 program stream received from the network.

If it is desired that the PC receives a programme from the coding and multiplexing system 16, it logs on to the server 50 through the network 52 using an internet protocol address. The address chosen tells the server which program is required.

The server 50 then selects the appropriate one, and one only, of the services available to it. It then transmits this video stream on a point-to-point basis. That is to say each PC has a separate connection through the network to the server.

If the network is a local area network (LAN), then this may be termed LAN TV.

Only one receiver is shown in Figure 2 but in practice there will be many, each requiring a separate network socket at the server. This is, therefore, an example of a multipoint communications system, where simultaneous communication between the server and many computers is required. The conventional approach has been to send one copy of each data packet to each member of the receiving group. This requires large bandwidth because the same information has to be sent many times.

A technique exists called multicast routing, in which one copy of each packet is sent out by the server and addressed to the group of computers that want to receive it. The network builds packet distribution trees that allow the source to send packets to all receivers. A useful description of multicast routing is contained in a paper entitled "Multicast over TCP/IP HOWTO" by Juan-Mariano de Goyeneche, 20 March 1998, www.tldp.org/HOWTO/Multicast-HOWTO.html*,* see especially sections 1, 2, 9 and 10 (references). By common consent, multicasting uses a particular range of IP addresses all commencing with "1110". Associated with the multicast service are service announcements on an SAP/SDP (Service Announcement Protocol/Service Description Protocol) data service, which amongst other things provide information about the names of the multicast services.

One problem with such video streaming over IP networks is that the interactive content is not necessarily streamed with the service being watched, and there is no mechanism in this environment for directing the interactive software application to retrieve this content. The concept of retuning does not exist and the complete multiplex is not being made available to the receiving device. On a satellite, terrestrial or cable receiver, the interactive facility has an interface to the RF front end in the set-top box, and is able to re-tune to the desired service. The transmitted signal contains the service lDs (identifications) of the other services. When this same video is streamed over an IP network, this service ID or tuning information is inappropriate and is no use to the interactive facility.

Although described here with video signals, the same problem in principle can arise with any interactive content.

International Patent Application WO03/056828 describes a set-top box receiver of the type used to receive satellite, terrestrial or cable digital video broadcasts which is adapted to receive also interactive digital television coming from an IP network. It makes use of the SAP/SDP (Service Announcement Protocol/Service Description Protocol) protocols associated with a multicast service as a logic link between the classic DVB services and the IP services. However it does not provide a facility to re-transmit and re-purpose interactive content for IP network delivery within a transport stream originally intended for delivery over satellite, cable or terrestrial RF broadcasting media.

United States Patent Application 2005/0028206 describes a Digital Interactive Delivery System which uses an Internet Protocol network through which multicast broadcasting takes place. The network can be fed with signals received from a satellite broadcast transmission. A server complex connected to the network includes a database server which stores an interactive program guide (IPG). At a receiver connected to the network, the IPG is obtained from the server complex and stored in a set-top box. The IPG can be displayed and a user can click on an item in the displayed IPG to retrieve a selected IP multicast stream. Canadian Patent 2,319,992 is similar. United States Patent Application 2002/0035600 discloses the embedding of uniform resource locators (URLs) in an analog television signal.

### SUMMARY OF THE INVENTION

The invention in its various aspects is defined in the independent claims below, to which reference may now be made. Advantageous features of the invention are set forth in the appendent claims.

Preferred embodiments of the invention are described in more detail below with reference to the drawings. In the embodiments an interactive facility is provided on a computer or other IP network terminal device in relation to digital video and/or audio signals, in particular an MPEG2 transport stream, over an internet protocol network. This is achieved by first connecting the computer through an internet protocol network to a first internet protocol address identifying a first network socket on a network server and receiving a first digital program stream. This is decoded and played, i.e. video is displayed, to the user. If a request for an interactive facility related to the first digital program stream is made by the user and is detected, in response thereto the user is presented on-screen with a menu of possible services. If the user selects one of the possible services and the identification of the selected service is determined, and if the selected service is in the first digital program stream, the selected service is enabled.

However, if the service is in another digital program stream, a second internet protocol address identifying a second network socket on a network server associated with the selected service is determined, by looking up the service ID in a table which associates each service ID with an IP address. The computer is then connected through the internet protocol network to this second internet protocol address identifying the second network socket and receives a second digital program stream, which is decoded and played to the user.

A user request for an interactive facility is detected by detecting a predetermined input from the user, in response to that providing the user with a menu or list of available services, and detecting the selection by the user of one of these available services. The menu of available services is preferably provided to the user by being displayed on-screen. The second internet protocol address associated with the selected service is determined by looking up in a table stored in the computer which associates service identifications and internet protocol addresses. The table is updated manually, but is preferably updated from data included in the digital program stream.

The data is in the form of a table which is inserted in the program stream at the IP network server which puts the program streams onto the IP networks. The server has means for receiving a broadcast-quality MPEG digital multiprogram transport stream, means for demultiplexing the received MPEG digital multiprogram transport stream into separate single program transport streams having respective service identifications, and means for applying the demultiplexed single program transport streams to respective network sockets having respective internet protocol addresses and communicating with an internet protocol network, and further comprises means for inserting in a table in the transport streams containing the internet protocol addresses of the network sockets in correspondence with the respective service identifications of the single program transport streams.

### BRIEF DESCRIPTION OF THE DRAWINGS

The invention will now be described in more detail by way of example with reference to the accompanying drawings, in which:
Figure 1 is a diagram illustrating three forms of digital television transmission, by satellite, terrestrially, and by cable;
Figure 2 is a diagram illustrating a digital television signal being streamed over an Internet Protocol network;
Figure 3 is a block diagram showing a multicast server receiving satellite transmissions and passing them over an IP network to a personal computer in accordance with an embodiment of the invention;
Figure 4 is an example of an interactive display; and
Figure 5 is a flowchart illustrating the operation of the embodiment of the invention shown in Figure 3.

### DETAILED DESCRIPTION OF THE PREFERRED EMBODIMENT

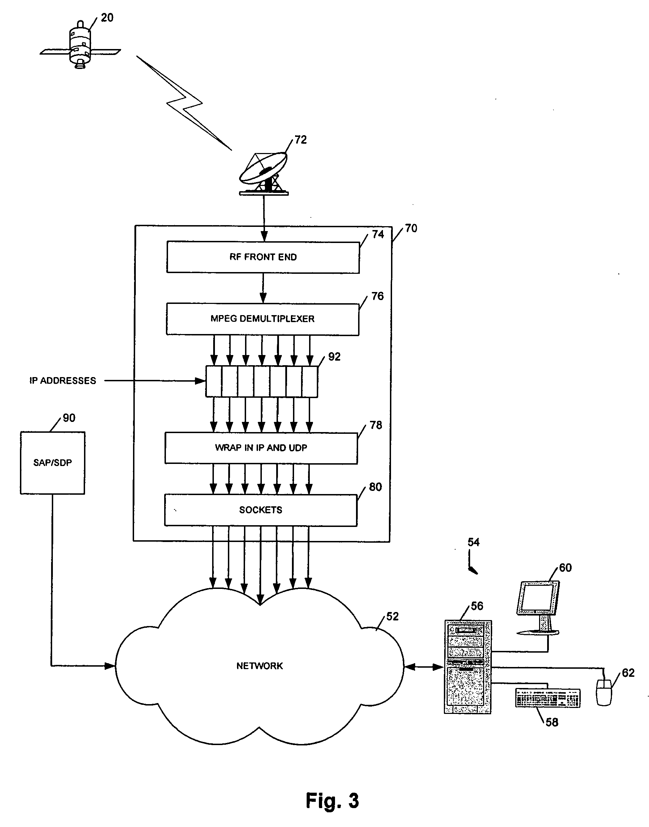

A preferred embodiment of the invention will now be described in more detail with reference first to the block diagram of Figure 3. This shows a personal computer (PC) 54 at a viewer's receiving station which is similar to that shown in Figure 2, having a main processor unit 56, keyboard 58, display 60, and mouse 62 in conventional fashion. The PC also contains a facility to decode an MPEG2 program stream received from the network. This PC is connected to an IP network 52, and the PC main unit includes a network card such as an Ethernet card to enable it to communicate with the network 52. This could be the internet, but in this example is a local area network such as in a building. Thus the PC functions as an IP network terminal. To the local area network is connected a multicast server 70 with an antenna dish 72 which receives the MPEG transport stream from the satellite 20. Alternatively, the server could be equipped to receive the terrestrial transmissions from transmission antenna 32 or to receive a cable signal from the cable operator 42. If the network were the internet, then the server 70 would more likely be located at and connected directly to the coding and multiplexing system 16. Wherever the signal comes from, it is a full-definition digital television signal of the same form as is transmitted by satellite, terrestrial or cable transmission.

The server 70 does not reduce the video quality as does the server 50 of Figure 2. The server instead provides full digital quality video at its output sockets to the network. That is, it 're-broadcasts' in unaltered form the existing program transport stream which is transmitted by satellite, terrestrially, or by cable. In this way, where the network is a local area network it may be possible to do away with a large number of coaxial cables currently needed to transmit the high-quality video signal on many different services.

The server 70 as shown includes an RF front end to reduce the received signal to baseband frequencies and outputs a multi-program transport stream. This is applied to an MPEG2 demultiplexer 76 which separates the different programs and generates an appropriate number of single program streams, each containing video, audio and data elementary streams. The single program streams are then applied to a stage 92 described below. Each program stream is then placed in an IP "wrapper" using UDP (User Datagram Protocol), which is adapted to handle multicast routing. TCP (Transmission Control Protocol) cannot be used for this purpose. This wrapping is indicated by block 78 in Figure 3, and the thus-wrapped IP packets are made available at respective UDP sockets 80 which are accessible from the network 52.

When a user desires to receive and view a particular service, they use their browser to instruct their computer to connect using its network card through the IP network 52 so as to access the corresponding IP address for the socket 80 on the server 70 which is supplying that service. They then receive that service, and that service only, in the form of a single program transport stream through the network 52. The connection through the network makes use of known multicast routing techniques. The computer decodes the received digital program stream in known manner and plays it to the user, that is displays video on the screen and/or replays audio through a loudspeaker.

An SAP/SDP multicast service announcement channel is also shown at 90. This announcement channel is provided to allow users to see what services are available. In practice the service may be part of the server 70, associated with it, or separate from it, but in any event has access to the network 52. On this service 90 is generated and transmitted a mapping table which relates the Service IDs to the Station Names of the available services.

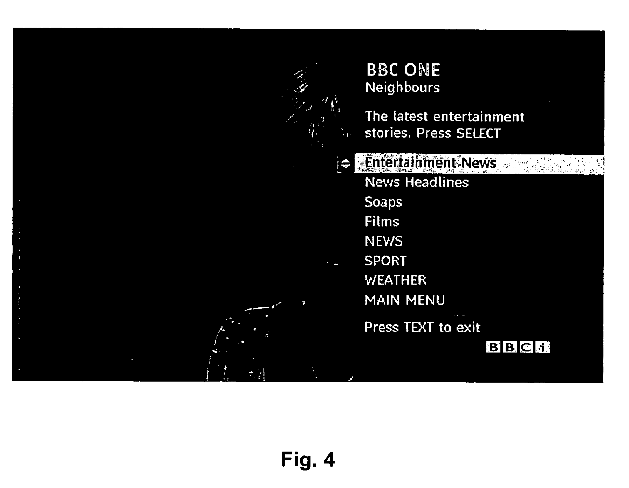

In order to replicate the interactive facility available to a conventional digital TV viewer by use of the set-top box remote control unit, the PC is provided with an additional software application. This is invoked by use of the keyboard or mouse in any predefined convenient manner. This software application then displays specified information on the computer screen, and the viewer can use the keyboard and/or mouse to select from the displayed information. If, say, the viewer wishes to see more about a particular news item, they can select this on the screen. An example of the interactive display is shown in Figure 4 (in this case the initial screen available to a viewer when the red button is pressed during the popular Australian soap opera "Neighbours"). The left-hand side of the screen shows the broadcast picture. On the right-hand side the broadcast picture is still discernable but it is overlaid with an interactive menu. In a conventional digital receiver, when the user selects one of the items in the menu, the receiver displays the relevant information or, in the case of extra audio and video content, retunes to the appropriate service, the number of which is associated with the item in the list. The information contained in the multiprogram transport stream received from the satellite contains this tuning information in the form of service lDs (identifications) associated with frequency, polarisation and information about the error correction scheme employed, which enable the conventional receiver to re-select the desired service, as described above.

But this is no use to the PC which has no tuning section, no access to the RF signal, and is only being sent a single program transport stream, not the complete multiplex.

The stage 92 between the MPEG demultiplexer 76 and the wrap block 78 in the server 70 will now be described. In this stage 92 an IP address is added to an existing table already in each of the demultiplexed single program transport streams and related to the table in the service 90. Thus the table is now updated at the computer from data in the digital program stream itself.

More particularly, mapping information of the type shown in the following Table is included within the table structure of the transport stream.

| **Table** | | |
|---|---|---|
| Service ID | Station Name | IP Address |
| 6301 | BBC 1 | 239.100.1.1 |
| 6302 | BBC 2 | 239.100.1.2 |
| 6303 | BBC 3 | 239.100.1.3 |
| ..... | ...... | .......... |
| ..... | ...... | ......... |

This table is in the multicast SAP/SDP announcement stream and is preferably included in the multiplex as part of the "other services" information structure. For example, in a DVB transport stream, the descriptor can be included within PSI/Sl (Program Specific Information/Service Information) tables, under the entry in the Program Map Table (PMT), Service Delivery Table (SDT), Network Information Table (NIT), or wherever else a service is listed. For each service entry, this descriptor contains the corresponding IP address of the stream.

The table lists the service identification (service ID) for each of the services provided by the server 70. Associated with each service ID is the internet protocol address of the socket at the server 70 which outputs that program. In this way the IP address, in the network domain, is linked with the service ID, in the digital video broadcasting (DVB) domain. This is achieved by adding the IP address to an existing table that includes the Service ID and Station Name.

When the interactive facility is used, and the viewer selects an option which requires a different service to be displayed, the computer detects the selection by the user of one of the possible services, and the interactive facility outputs the service ID required. If the selected service is in the currently-received program stream, it is enabled, e.g. displayed. However, if it is in another program stream, the computer then looks the service ID up in the Table and retrieves the corresponding IP address. It is now able to instruct the network card to connect to this new network address and thus to change to a different socket at the server 70 and receive a different service in a different program stream from that socket. This is then decoded and played to the user. A major advantage of inserting this additional information upstream from the user is that it can be dynamically changed in a manner transparent to the user.

In this way the interactive facility of the conventional digital TV receivers is replicated in a system where the receiving PC does not receive the many services, without the need to disturb the digital signal transmitted from the coding and multiplexing system over the satellite, terrestrial and cable transmission links.

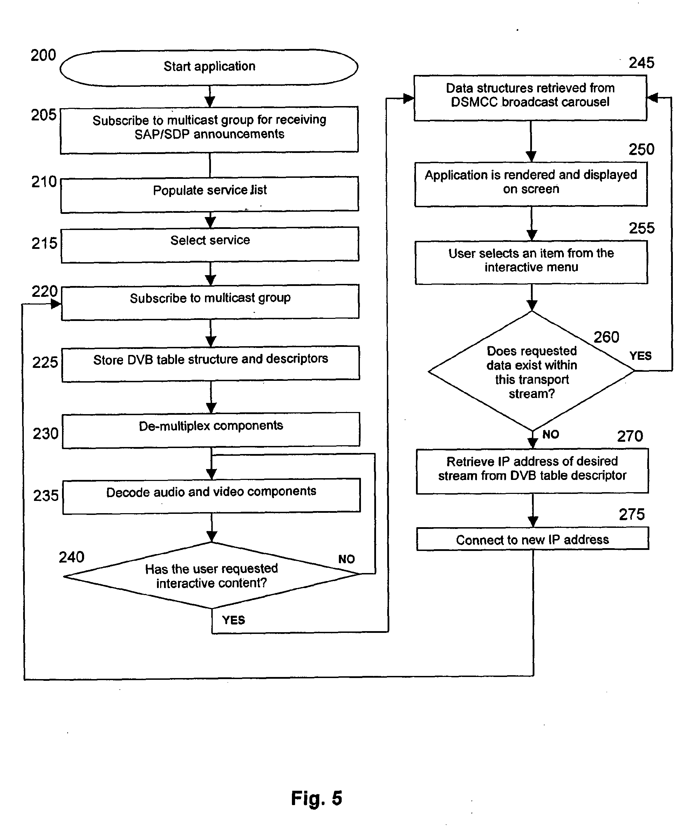

Figure 5 is a flowchart illustrating the operation of the PC of Figure 3 in accordance with this embodiment of the invention. In the first step 200, the user starts the client application, immediately followed by an application subscribing to the multicast SAP/SDP announcement stream (step 205). This populates the on-screen service list (step 210) of the client application; typical items are shown in Figure 4, described above. The user is then able to select a service to view or listen to (step 215), at which point the application now subscribes to the relevant multicast group (step 220).

To decode the picture, upon first receiving the transport stream, the application stores the DVB table structure and related descriptor elements (step 225). Then it is able to de-multiplex the components (step 230), and decode the audio and video components (step 235).

If the user then decides to access any available interactive content (step 240 = YES), the application must retrieve the data components that carry this content from the Digital Storage Media Command and Control (DSMCC) object carousel, broadcast in the transport stream (step 245). Now the computer knows where to go to receive the desired interactive content, and the software instructs the network card to go to that IP address, which is the address of another socket 80 at the server 70, to receive the desired program. The new IP address could alternatively be a network socket on a different server on the IP network.

The user can then navigate the application by selecting items from on-screen menus (step 255). For each item selected by the user, the application must decide if the requested data exists in the current program transport stream (step 260 = YES), or if the content is only available in another service or program stream (step 260 = NO). In the latter case, the application must look up the IP address of the required stream from the SAP/SDP announcement field (step 265) as received in step 205, using the Table. The application can then connect to the new IP multicast stream (step 275) and fetch the required components.

Because the table lists the service identification (service ID) for each of the services provided by the server 70 with an associated internet protocol address of the socket at the server 70 which outputs that program, when the interactive facility is used, and the viewer selects an option which requires a different service to be displayed, the interactive facility outputs the service ID required, looks this up in the Table, and retrieves the corresponding IP address. It is now able to instruct the network card to connect to this new network address and thus to change to a new network socket 80 at the server 70 and receive a different service from that socket. The application is then able to render and display the interactive content on the user's screen 60.

The manner in which the Table is held in the computer can vary. It may be held simply in plain text, or it may be in a mark-up language such as XML.

As will be seen from the foregoing, the embodiment described provides a facility to re-transmit and re-purpose interactive content for IP network delivery within a transport stream originally intended for delivery over satellite, cable or terrestrial RF broadcasting media. This provides the user of a PC or other IP network terminal device connected to an IP network, which may be the internet or a local area network, with the same facility as is available to the viewer of a satellite, terrestrial, or cable digital broadcast. With a local area network this can lead to a substantial reduction in cabling as existing LAN cabling can be used to carry the interactive television or video services without the need for extra coaxial or like cabling. No manual updating of the table contents is necessary.

While various embodiments have been described in detail, many changes and modifications may be made within the scope of the invention and the invention is not to be limited to the examples described. In particular, the invention may be implemented in software on a general purpose computer or may be implemented is special purpose hardware such a dedicated chips or the like.

## Claims

1. A method of providing an interactive facility on a computer or other IP network terminal device in relation to digital video and/or audio signals over an internet protocol network, the method comprising the steps of:
connecting the terminal device through an internet protocol network to a first internet protocol address identifying a first network socket on a network server and receiving therefrom a first digital program stream;
decoding the received digital program stream and playing it to the user;
detecting a user request for an interactive facility related to the first digital program stream and in response thereto presenting the user with a menu of possible services;
detecting the selection by the user of one of the possible services and determining the identification of the selected service;
if the selected service is in the first digital program stream, enabling the selected service, and if the service is in another digital program stream, determining a second internet protocol address identifying a second network socket on a network server and associated with the selected service;
connecting the terminal device through the internet protocol network to the second internet protocol address identifying the second network socket and receiving therefrom a second digital program stream; and
decoding the received second digital program stream and playing it to the user;
in which the step of detecting a user request for an interactive facility comprises detecting a predetermined input from the user, in response thereto providing the user with a menu of available services, and detecting the selection by the user of one of the available services;
the step of determining the second internet protocol address associated with the selected service comprises looking up in a table which associates service identifications and internet protocol addresses, the table being stored in the terminal device; and
in which the table is updated from data included in the digital program stream.

2. A method according to claim 1, in which the digital program streams comprise MPEG-encoded signals.

3. A method according to claim 1 or 2, in which the menu of available services is provided to the user by being displayed on-screen.

4. A method according to claim 1, 2 or 3, in which the terminal device is a computer.

5. Apparatus for providing an interactive facility on a computer or other IP network terminal device in relation to digital video and/or audio signals over an internet protocol network, the apparatus comprising:
means for connecting the terminal device through an internet protocol network to a selected internet protocol address to receive therefrom a selected digital program stream;
means for instructing the connecting means to connect the computer to a first internet protocol address identifying a first network socket on a network server and for receiving therefrom a first digital program stream;
means for decoding a received digital program stream and for playing it to the user;
means for detecting a user request for an interactive facility related to the first digital program stream and in response thereto presenting the user with a menu of possible services;
means for detecting the selection by the user of one of the possible services and determining the identification of the selected service;
means, if the selected service is in the first digital program stream, for enabling the selected service, and if the service is in another digital program stream, for determining a second internet protocol address identifying a second network socket on a network server and associated with the selected service; and
means for instructing the connecting means to connect the terminal device to the second internet protocol address identifying a second network socket on a network server and for receiving therefrom a second digital program stream;
in which the means for detecting a user request for an interactive facility comprises means for: detecting a predetermined input from the user, in response thereto providing the user with a menu of available services, and detecting the selection by the user of one of the available services;
the means for determining the second internet protocol address associated with the selected service comprises means for looking up in a table which associates service identifications and internet protocol addresses, the table being stored in the terminal device; and
in which the table is updated from data included in the digital program stream.

6. Apparatus according to claim 5, in which the connecting means comprises a network card.

7. Apparatus according to claim 5 or 6, including means for displaying a menu of available services is provided to the user on-screen.

8. Apparatus according to claim 5, 6 or 7, in which the terminal device is a computer.

9. A server for use in providing an interactive facility on a computer or other IP network terminal device in relation to digital or audio signals streamed in an internet protocol network, the server comprising:
means for receiving a broadcast-quality MPEG digital multiprogram transport stream;
means for demultiplexing the received MPEG digital multiprogram transport stream into separate single program transport streams having respective service identifications; and
means for applying the demultiplexed single program transport streams to respective network sockets having respective internet protocol addresses and communicating with an internet protocol network;
further comprising means for inserting in a table in the transport streams containing the internet protocol addresses of the network sockets in correspondence with the respective service identifications of the single program transport streams.

10. A computer program which, which installed on a computer, causes the computer to execute the method of any of claims 1 to 4 and 9.
